Europäisches Patentamt

European Patent Office

Office européen des brevets

(11) Publication number: **0 395 376**
**A2**

# (12) EUROPEAN PATENT APPLICATION

(21) Application number: **90304439.4**

(51) Int. Cl.5: **G06F 13/12**

(22) Date of filing: **25.04.90**

(30) Priority: **28.04.89 US 345380**

(43) Date of publication of application:
**31.10.90 Bulletin 90/44**

(84) Designated Contracting States:
**DE FR GB**

(71) Applicant: **International Business Machines
Corporation
Old Orchard Road
Armonk, N.Y. 10504(US)**

(72) Inventor: **Fredericks, Kenneth James
Tamarack Hill Drive
Poughkeepsie, New York 12603(US)**

Inventor: **Gregg, Thomas Anthony
121 Bellevue Road
Highland, New York 12528(US)**
Inventor: **Meifert, Kenneth Arthur, Jr.
11 Brusk Drive
Hopewell Junction, New York 12533(US)**
Inventor: **Sager, Anthony Robert
RD 2, Box 472A
Red Hook, New York 12571(US)**

(74) Representative: **Atchley, Martin John
Waldegrave
IBM United Kingdom Limited Intellectual
Property Department Hursley Park
Winchester Hampshire SO21 2JN(GB)**

(54) Data processing and handling system with channel extender in data processor to peripheral device data transfer link.

(57) The present invention relates to a data processing and handling system comprising a data processor (120), a processor channel (107), at least one peripheral device (100), a peripheral device controller (101) and a channel extender (103, 105) for extending the distance that the peripheral device controller may be operated from the processor channel while performing data chaining in a data streaming mode through the channel extender, in which the processor channel has the ability to control data transfer by transmitting a Suppress Output signal to the peripheral device controller in response to which the peripheral device controller stops sending or requesting data.

According to the invention the system is characterised in that the channel extender (103, 105) comprises

(a) first means (199, 250, 251, 252) for capturing peripheral device controller generated bytes in flight and their associated data transfer tags,

(b) second means (205), coupled to the first means, for storing all captured bytes and tags, when the system is in data streaming mode from the time the processor channel transmits the Suppress Output signal at least until the time the peripheral device controller stops sending or requesting data, and

(c) third means (275, 276, 277), coupled to the second means, for outputting the bytes and tags stored in the second means to the processor channel under processor channel control.

EP 0 395 376 A2

FIG.1

CONTROL UNIT    EXTENDER Y BOX    EXTENDER X BOX    CHANNEL

PERIPHERAL DEVICE 100

PROCESSOR 120

OEMI INTERFACE 102    SERIAL LINK 104    OEMI INTERFACE 106

# DATA PROCESSING AND HANDLING SYSTEM WITH CHANNEL EXTENDER IN DATA PROCESSOR TO PERIPHERAL DEVICE DATA TRANSFER LINK

The present invention relates to data processing and handling systems in which data is communicated between a data processor and remote peripheral devices through a channel-to-peripheral controller over a serial data exchange link and in which the length of the serial data exchange link is increased by using a channel extender.

There are many information handling systems known which transmit data between a data processor channel and a peripheral device across a serial data exchange link. Channel extenders are often used in these systems to increase the distance that the data processor and peripheral devices may be separated. One such system is described in US-A-4,712,176, hereby incorporated by reference.

According to the above US patent, data transfers across the serial data exchange link are controlled by control lines called "tags", in particular the tags Service In, Service Out, Data In and Data Out as described in the patent specification. These tags, collectively called data transfer tags, are raised and lowered in one of several predetermined sequences that control the process of data transfer. The actual data being transferred is carried on buses referred to as Bus In (for data being transferred toward the processor) and Bus Out (for data being transferred to the peripheral device) in the above US patent.

Data transfer, on one interface described in the above US patent, takes place at different rates that are appropriate to different devices, and in the simplest case the rate is controlled by the two data transfer tags Service Out and Service In. These signals are interlocked by the requirement that the signals are changed only in the following sequence: the control unit raises Service In, the channel raises Service Out, the Control Unit drops Service In and the Channel drops Service Out. The procedure is commonly called handshaking. The interlocked mode is also called direct current interlocked mode.

Another data transfer mode also described in US-A-4,712,176 is data streaming. In this mode a channel or a control unit raises a data transfer tag for a predetermined period of time and then drops the tag without waiting for a response by the receiving component. The receiving station sends the data transfer tags as in interlocked mode except that the tags are sent on the rise of the corresponding tag without waiting for the fall of the corresponding tag. The tags are counted to check that the number of tags sent equals the number of tags received.

In a conventional I/O channel which transfers data to and from control units using the aforementioned data streaming mode, there are minimum channel command word (CCW) byte count limitations particularly when performing "data chaining" operations.

Data chaining provides the ability to transfer a plurality of blocks of data within a single CCW. The first CCW of the data chain string has the control unit command (e.g., read or write), data address and a byte count. The rest of the CCWs in the chain do not have a command but do have a data address and byte count. This feature allows data transferred by a single control unit command to be scattered to a plurality of locations in main store during read operations or be gathered from a plurality of locations in main store during write operations. Since the control unit receives only one command for the entire string of data chained CCWs, it has no knowledge that data chaining is taking place. In the case of a read operation, the data chaining is interlocked in that data received from one CCW must be stored in main store before the next CCW in the string can be fetched from main store. Since both data and CCWs reside in the same memory (main store) interlocking allows data received by one CCW to alter the next data chain CCW. This interlocking reduces data transfer throughput.

Since it requires a relatively long time period from the storing of the last byte of data for one CCW to the fetching of the next CCW, the channel requires a method of restricting data transfer from the control unit during this time period. The ability of the channel to restrict data transfer ensures that the channel has the new CCW byte count necessary to determine how to respond to the control unit. When the CCW byte count is not zero, the channel responds to the control unit with Service Out or Data Out; and, when the byte count of the last CCW of the string reaches zero, the channel can respond to control unit requests with a Stop command (as described in US-A-4,712,176 by raising Command Out) and inform the control unit of how many bytes were transferred by the channel.

There are situations during data chained read operations when the channel will respond to requests from the control unit while it is fetching the next CCW. In this case the channel may accept more bytes than the sum of all of the CCW byte counts in the string. When the channel detects this condition, a "chaining check" indicator is set in a status word indicating that the read operation was unsuccessful.

Using a DC Interlocked type data transfer, there are two mechanisms for restricting data transfer, both of which are able to stop data transfer within one byte. Therefore, in DC Interlock mode the smallest data

3

chained CCW byte count can be one (1).

The first restricting mechanism allows the channel to simply stop responding to control unit request (Service In and Data In) while the channel is storing data for the current CCW and fetching the next CCW. Since the control unit is in DC Interlock mode, it will not present another request to the channel until a response is received for the current request. Count control is always maintained. Byte multiplexer channels typically use this mechanism.

The second mechanism is Suppress Data Control, via a mechanism like the Suppress Out tag described in US-A-4,712,176. During data transfer the channel can raise a Suppress Out interface line as it responds to the last byte for a CCW. The control unit must stop data transfer within one byte. In this case the channel may respond to this request, and the control unit will not make any more requests until the Suppress Out line drops. Since the smallest allowed data chained CCW count is one, the channel still has count control even though it has accepted one extra byte from the control unit. Selector and Block multiplexer channels typically use this mechanism.

These two mechanisms allow channel programs to be written with read out data chaining CCW byte counts of one (1). With buffered control units these programs never cause data overruns or chaining checks.

However, in data streaming mode, the control unit is not required to wait for a response from the channel before generating more requests. This mode is not interlocked; therefore, there may be a plurality of requests (Service In and Data In tags) and a plurality of responses (Service Out, Data Out and Command Out tags) on the I/O interface cable (including optical fibre) at the same time. The number of requests and responses on the interface is called "bytes in flight", and it is determined by the data rate and the apparent length of the interface and optical cable measured in time. This number becomes very large when a channel extender is part of the interface cable. For example, with a commercially available IBM (Registered Trade Mark) 3044 channel extender connecting a control unit operating at 1 megabyte per second at a length of 2 kilometres, the number of "bytes in flight" is about 24. With an improved channel extender operating at 4.5 megabytes per second at the same length, this number increases to about 95.

Data chaining minimum byte count limitations are directly related to the number of "bytes in flight". Neither of the data restricting mechanisms described for the DC Interlock mode is able to maintain channel count control.

The first mechanism, in which the channel stops responding to a request, always causes data overruns in data streaming mode. In a conventional channel, responses are always immediately answered. The only time that a channel is unable to answer a request is when a channel receives a request when this condition exists, it stops responding to any more requests from the control unit. The control unit detects that the channel has stopped, raises Status in and eventually signals an overrun. This drastic action is necessary to prevent the loss of the "bytes in flight", thereby ensuring data integrity.

The second mechanism (Suppress Data Control) can be used in data streaming mode. However, Suppress Out cannot stop data transfer within one byte because of the "bytes in flight". The channel has no knowledge of the number of "bytes in flight" and it must receive all of the data for a CCW before it can fetch the next CCW. Once Suppress Out is raised, all of the "bytes in flight" must be acknowledged by the channel. While these bytes are being acknowledged, the channel does not have count control since it is busy fetching the next CCW. When the channel finally receives the CCW, a chaining check will result if the channel received more bytes than it has buffering space to accommodate or if the sum of all the CCW byte counts in the string is less than the number of bytes accepted by the channel. In either of these cases, the channel program does not work in Data Streaming mode even though the CCW byte counts may be relatively large.

It would be desirable to have a data processing and handling system capable of performing data chaining in a data streaming mode through a channel extender where, for example, the distance between a data processor channel and a peripheral device controller could be several (e.g. 1, 2 or 3) kilometres as compared with the less than 0.5 kilometre separation limitation imposed by known systems.

The object of the present invention is to provide an improved channel extender in a data processing and handling systems in which data is communicated between a data processor and remote peripheral devices through a channel-to-peripheral controller over a serial data exchange link and in which the length of the serial data exchange link is increased by using a channel extender.

The present invention relates to a data processing and handling system comprising a data processor, a processor channel, at least one peripheral device, a peripheral device controller and a channel extender for extending the distance that the peripheral device controller may be operated from the processor channel while performing data chaining in a data streaming mode through the channel extender, in which the processor channel has the ability to control data transfer by transmitting a Suppress Output signal to the peripheral device controller in response to which the peripheral device controller stops sending or requesting data.

According to the invention the system is characterised in that the channel extender comprises

(a) first means for capturing peripheral device controller generated bytes in flight and their associated data transfer tags,

(b) second means, coupled to the first means, for storing all captured bytes and tags, when the system is in data streaming mode from the time the processor channel transmits the Suppress Output signal at least until the time the peripheral device controller stops sending or requesting data, and

(c) third means, coupled to the second means, for outputting the bytes and tags stored in the second means to the processor channel under processor channel control.

In order that the invention may be more readily understood an embodiment will now be described with reference to the accompanying drawings, in which:

FIG. 1 depicts an overview of a preferred embodiment of the invention showing a data processing and handling system suitable for performing data chaining in a data streaming mode,

FIG. 2 is a functional block diagram indicating how to implement an In Tag Buffering (ITB) feature in the data processing and handling system depicted in FIG. 1,

FIG. 3 depicts a "bus buffer" hardware diagram which, in accordance with the teachings of the embodiment of the invention described, may be used to implement a portion of the ITB functional block diagram shown in FIG. 2.

FIG. 4 depicts a "tag buffer" hardware diagram which may be used to implement another portion of the ITB functional block diagram shown in FIG. 2.

FIG. 5 is a flow chart depicting the function of ITB control logic needed to ensure no data is lost when performing the ITB function.

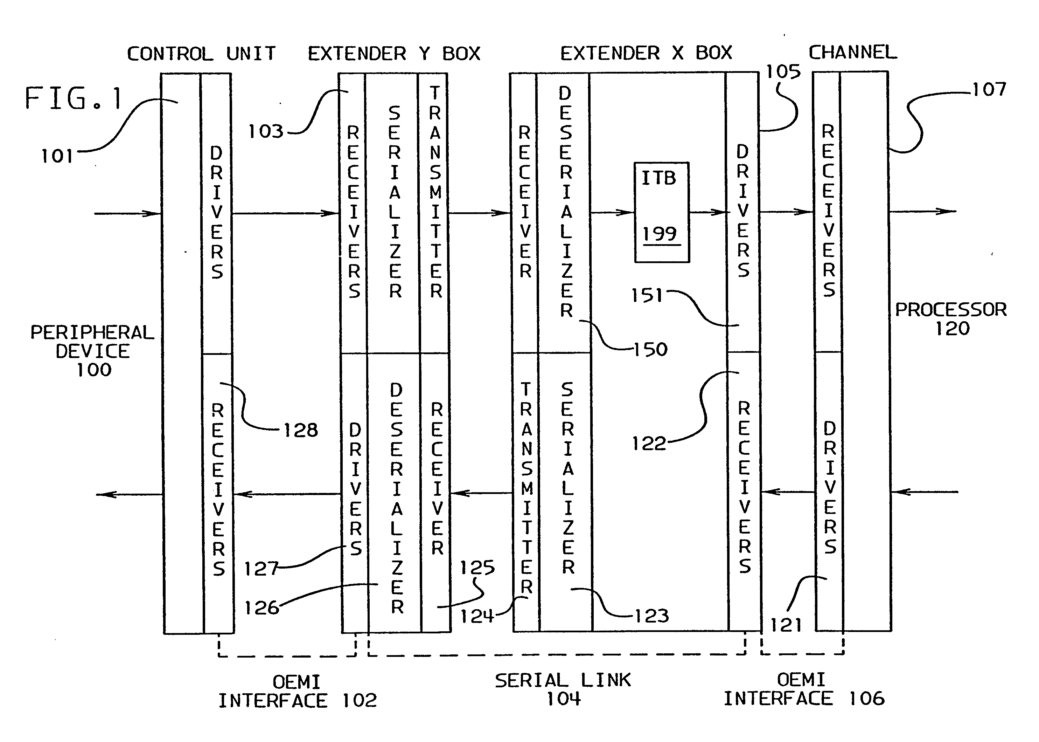

FIG. 1 depicts a data processing and handling system that incorporates an In Tag Buffering (ITB) function to be described below. A peripheral device 100 is shown coupled to a data processor 120 via the combination of a peripheral device control unit 101, a standard "OEMI" interface 102, "Extender Y Box" 103, serial link 104, "Extender X Box" 105 (in which the ITB function is implemented), OEMI interface 106 and processor channel 107.

As for how data (and control tags) flow through the system, starting with processor 120, it can be seen that processor 120 is coupled to channel 107 and that drivers 121 in channel 107 drive data in parallel over interface 106; receivers 122 in Extender X Box 105 receive the data; the data is serialised by serialiser 123 and then transmitted over serial link 104 by transmitter 124; receiver 125 takes data off the serial link at Extender Y Box 103; data is then deserialised (by deserialiser 126) and then is driven (by drivers 127) over interface 102 (in parallel) to receivers 128 in control unit 101. Finally, the parallel data is presented to peripheral device 100 from control unit 101.

The same pattern of events takes place when transmitting from peripheral device 100 to processor 120, except that extender 105 is shown to include a unit 199 for implementing the ITB function. Unit 199 is shown located between deserialiser 150 and drivers 151.

The convention used herein is that data and tags flowing towards the processor are said to flow in the "In" direction and, conversely, data and tags flowing towards the peripheral device are flowing in the "Out" direction. ITB unit 199 is shown in FIG. 1 to be located in the "In" stream and is used, as will be seen hereinafter, to buffer In tags and data flowing in towards processor 120.

Each of the blocks shown in FIG.1, together with suitable data transfer protocols, is described in US-A-4,712,176 and will not be further described herein.

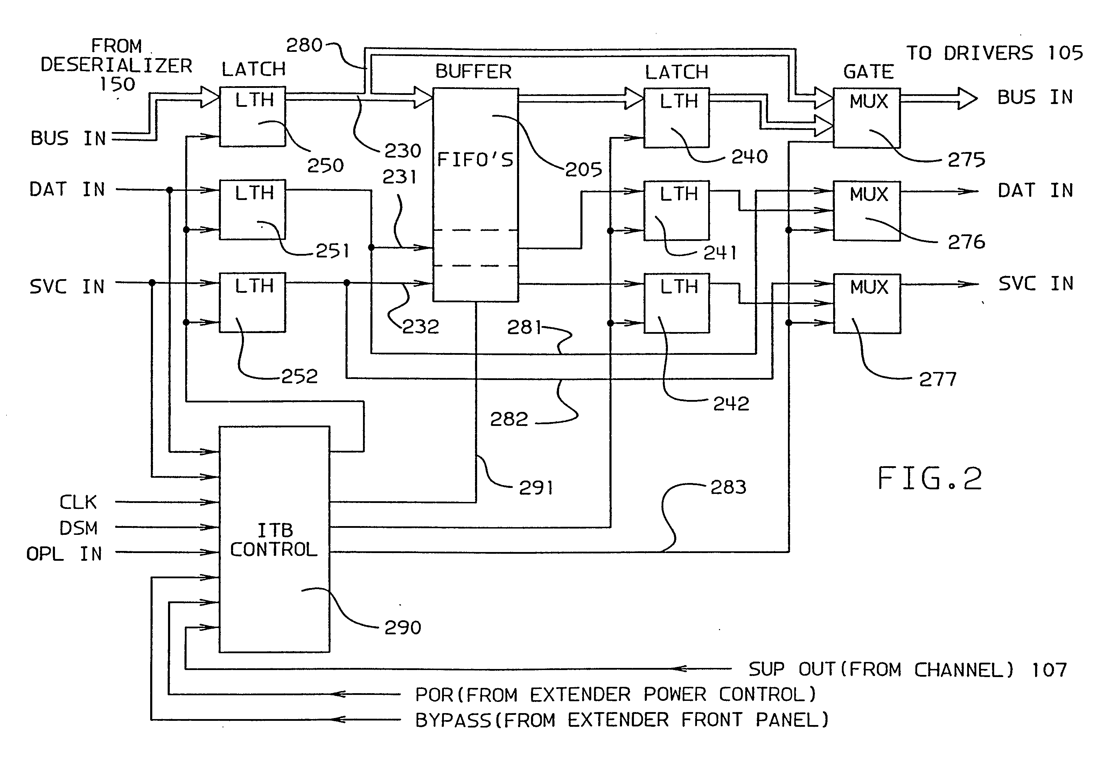

FIG.2 is a functional block diagram indicating a preferred way of implementing the ITB unit 199 in the data processing and handling system depicted in FIG.1. In order to follow the functional description of the ITB unit set forth in the text hereinafter reference should be made to both FIG. 1 and FIG. 2.

The ITB unit 199 buffers Bus In data and Data In/Service In tags (only when the data transfer is in data streaming mode as indicated by the DSM input shown in FIG.2) between extender 105 deserialiser 150 and the Bus In, Data In/Service In drivers 151 to channel 107. As illustrated in FIG. 2, buffering is performed utilising a set of first in/first out (FIFO) devices 205 which operate in a "flow through" mode under control of the Suppress Out (SUP OUT) signal from channel 107 coupled to FIFO 205 via ITB control 290 and link 291. Two sets of FIFO devices can be used in an interleave mode to allow use of slower, lower cost technology.

The ITB unit 199 is, as illustrated in FIG. 2, held reset by the logical OR of Power On Reset (POR) from extender 105 power control or NOT Operational In (OPL IN) from deserialiser 150. As long as POR is inactive, the ITB function is initiated each time that OPL IN goes active, and terminated when OPL IN goes inactive, where OPL IN active is indicative of the peripheral device being validly connected to the processor.

The Bus In (BUS IN) data, and the Data In/Service In tags (DAT IN/SVC IN) from deserialiser 150 are latched (via latches 250, 251 and 252) at each deserialiser clock cycle (CLK), in preparation for buffering, when in data streaming mode; or for buffer bypassing, via link 280, when NOT in data streaming mode.

When NOT in data streaming mode, as described by way of example herein, the SVC IN tag is activated first, before the DAT IN tag. Independent of mode, these tags toggle back and forth and are each associated with every other byte of data on Bus In. For example, when data streaming at a 4.5 megabyte rate, the Data In and SVC IN tags are each 225ns in duration. In this case the Bus In data and Data In/Service In tags bypass the buffers (via links 280, 281 and 282 respectively) and are gated directly to the Bus In, Data In/Service In drivers, and on to channel 107 via MUXs 275, 276 and 277. As shown in FIG. 2 the arrangement being described allows the bypass mode to be selected manually via a switch on extender 105 front panel, which activates gates 275-277 via ITB control 290 and link 283.

When data streaming mode is recognised (which, according to the arrangement being described, takes place when the Data In tag is activated first), the Bus In data and the Data In/Service In tags are loaded into the buffers each deserialiser clock cycle (via links 230, 231 and 232 respectively) for subsequent unloading under control of Suppress Out.

When Suppress Out is inactive, the Bus In data and Data In/Service In tags are unloaded from the buffers each deserialiser clock cycle, and gated to the Bus In, Data In/Service In drivers to channel 107 via devices 240-242 and MUXs 275-277, as shown in FIG. 2.

When Suppress Out is active, the Bus In data and Data In/Service In tags accumulate in the buffers until Suppress Out goes inactive, or the buffers become full, at which time the buffer unloading process begins/resumes. This is accomplished under the control of ITB control 290.

Each of the elements depicted in FIG. 2 is either available as a standard off the shelf logic component (latches, MUXs, etc.) or is well within the ability of those skilled in the art to construct in view of the foregoing functional description.

It should be noted that the only effect of the arrangement being described on the Bus In/Service In tags is to buffer them temporarily whenever the channel activates Suppress Out during data streaming data transfer, i.e. timings and content remain exactly the same as received from extender 105 deserialiser 150. The arrangement described does not have any effect on the Bus Out, or any "Out" tags, or any "In" tags, other than Data In and Service In, in the data processing and handling system described herein.

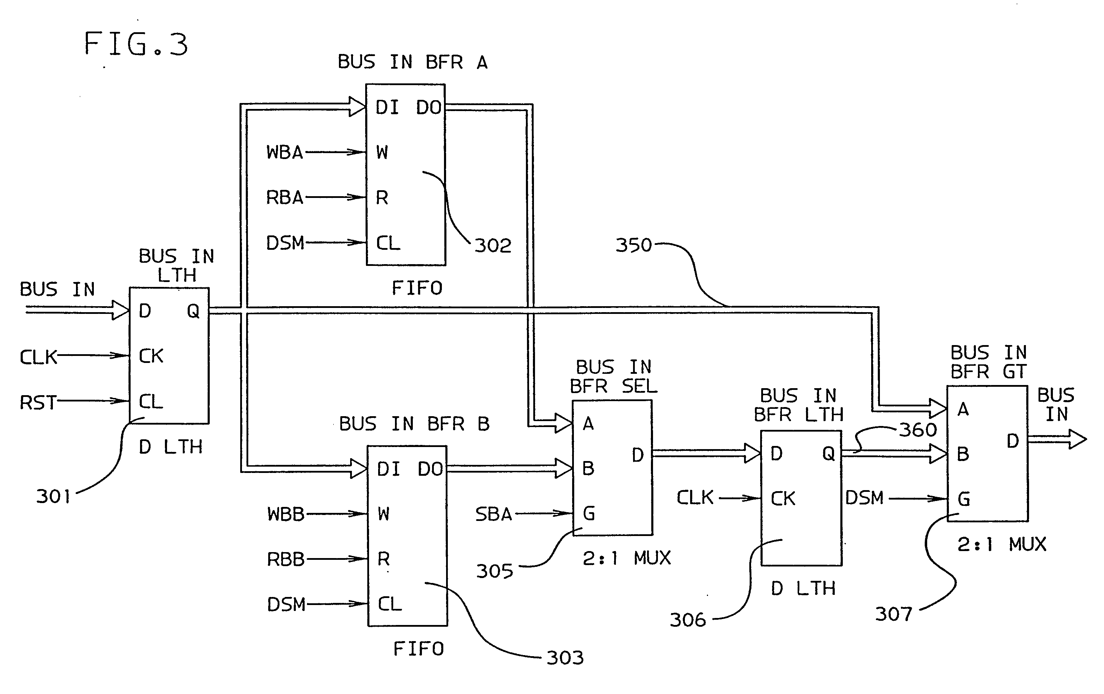

FIG. 3 depicts a "bus buffer" hardware diagram which may be used to implement a portion of the ITB unit 199 functional block diagram shown in FIG. 2.

BUS IN LTH (Bus In Latch) stores Bus In data (BUS IN) from extender 105 deserialiser 150 prior to loading it into Bus In buffers 302 and 303 (BUS IN BFR A, BUS IN BFR B), respectively. Latch 301 is held reset when the Reset control signal (RST) is active. When Reset is inactive, the Bus In data is latched each deserialiser clock cycle (CLK) by latch 301.

Bus In BFR A (Bus In buffer A), sometimes referred to hereinafter as buffer 302, and Bus In BFR B (Bus In buffer B), sometimes referred to hereinafter as buffer 303, buffer Bus In data (from Bus In Latch 301) for subsequent transmission (under control of Suppress Out) to channel 107. The buffers are held reset when the data streaming mode control signal (DSM) is inactive. When data streaming mode is active, Bus In data (from Bus In Latch 301) is loaded into buffer 302 each time the Write Buffer A (WBA) control signal pulses (for the sake of illustration, WBA pulses once every other deserialiser clock cycle) and into buffer 303 each time the Write Buffer B (WBB) control signal pulses (WBB pulses alternately with WBA pulses in the illustrative embodiment being set forth).

When data streaming mode is active, Bus In data is unloaded from buffer 302 each time the Read Buffer A (RBA) control signal pulses (RBA pulses once every other deserialiser clock cycle, as long as Bus In Buffer 302 contains data and Suppress Out is inactive), and from buffer 303 each time the Read Buffer B (RBB) control signal pulses (RBB pulses alternately with RBA pulses, as long as Bus In Buffer 303 contains data and Suppress Out is inactive).

BUS IN BFT SEL (Bus In Buffer Select) 305 can be implemented by a 2:1 MUX which selects Bus In data unloaded from Bus In buffer 302 when the Select Buffer A (SBA) control signal is active. SBA is active during the Read Buffer A (RBA) pulse.

Unit 305 also selects Bus In data unloaded from Bus In buffer 303 when the Select Buffer A control signal is inactive. SBA is inactive during the Read Buffer B (RBB) pulse.

BUS IN BRF LTH (Bus In Buffer Latch) 306 stores Bus In data (from buffers 302 and 303 via Bus In Buffer Select 305) for subsequent transmission to channel 107. Bus In data (from unit 305) is latched each deserialiser clock cycle.

Finally, FIG. 3 depicts BUS IN BFR GT (Bus In Buffer Gate) 307 which, when the data streaming mode (DSM) control signal is inactive, selects Bus In data from Bus In Latch 301 directly via link 350, thereby bypassing the Bus In buffers 302 and 303. When the data streaming mode (DSM) control signal is active, unit 307 selects Bus In Data from Bus In Buffer Latch 306, i.e. selects buffered Bus In data via link 360.

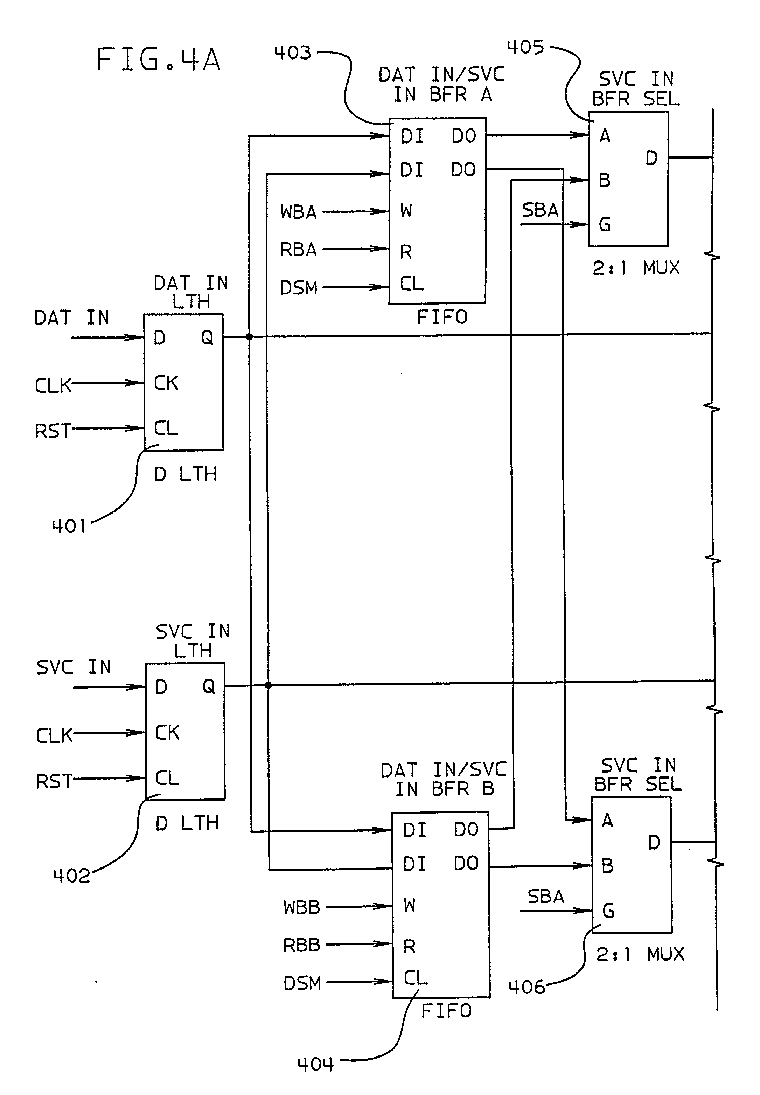

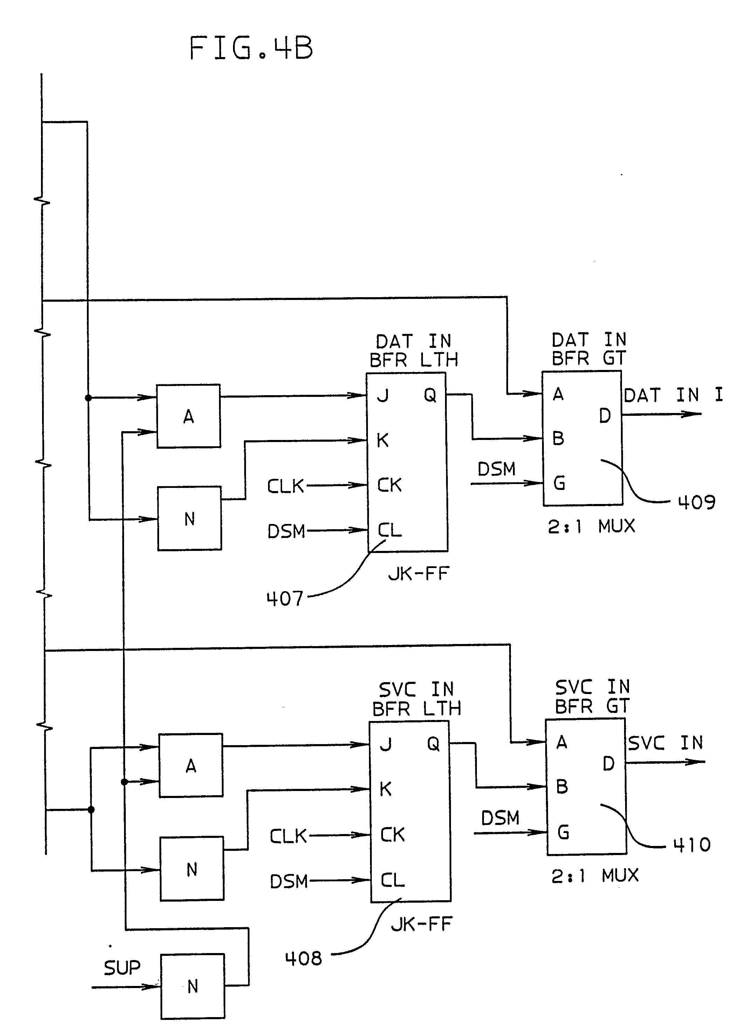

FIG. 4 depicts a "tag buffer" hardware diagram which may be used to implement another portion of the ITB unit 199 functional block diagram shown in FIG. 2.

DAT IN LTH (Data In Latch) 401 and SVC IN LTH (Service In Latch) 402 store Data In and Service In tags (DAT IN and SVC IN) from extender 105 deserialiser 150 prior to loading the tags into Data In/Service In Buffers (DAT IN/SVC IN BFR A, DAT IN/SVC IN BFR B), also sometimes referred to hereinafter as buffers 403 and 404 respectively. Latches 401 and 402 are held reset when the Reset control signal (RST) is active. When Reset is inactive, the Data In and Service In tags are latched each deserialiser clock cycle (CLK).

DAT IN/SVC IN BFR A (Data In/Service In Buffer A), unit 403, and DAT IN/SVC IN BFR B (Data In/Service In Buffer B), unit 404, buffer Data In and Service In tags from DAT IN and SVC IN LTH's, 401 and 402, for subsequent transmission (under control of Suppress Out) to channel 107. The buffers are held reset when the data streaming mode control signal (DSM) is inactive. When data streaming mode is active, Data In and Service In tags are loaded into buffer 403 each time the Write Buffer A (WBA) control signal pulses (WBA pulses once every other deserialiser clock cycle) and into buffer 404 each time the Write Buffer B (WBB) control signal pulses (WBA pulses alternately with WBA pulses).

When data streaming mode is active, Data In and Service In tags are unloaded from buffer 403 each time the Read Buffer A (RBA) control signal pulses (RBA pulses once every other deserialiser clock cycle, as long as Data In/Service In buffer 403 contains tags and Suppress Out is inactive) and from buffer 404 each time the Read Buffer B (RBB) control signal pulses (RBB pulses alternately with RBA pulses, as long as Data In/Service In buffer 404 contains tags and Suppress Out is inactive).

DAT IN BFR SEL (Data In Buffer Select) 405 and SVC IN BFR SEL (Service In Buffer Select) 406 (preferably implemented as 2:1 MUXs) select Data In and Service In tags unloaded from buffer 403 when the Select Buffer A (SBA) control signal is active (SBA is active during the Read Buffer A (RBA) pulse). Units 405 and 406 select Data In and Service In tags unloaded from buffer 404 when the Select Buffer A (SBA) control signal is inactive (SBA is inactive during the Read Buffer B (RBB) pulse).

DAT IN BFR LTH (Data In Buffer Latch) 407 and SVC IN BFR LTH (Service In Buffer Latch) 408 (preferably implemented by JK flip flops) store Data In and Service In tags (from buffers 403 and 404 via units 405 and 406) for transmission to channel 107. Data In and Service In tags are latched each deserialiser clock cycle.

FIG. 4 goes on to show DAT IN BFR GT (Data In Buffer Gate) 409 and SVC IN BFR GT (Service In Buffer Gate, 410. When the Data Streaming Mode (DSM) control signal is inactive, units 409 and 410 select Data In and Service In tags from latches 402 and 402) bypassing Data In/Service In buffers 403 and 404). When the Data Streaming Mode (DSM) control signal is active, units 409 and 410 select Data In and Service In tags from latches 407 and 408 (buffered Data In/Service In tags).

To complete the detailed description of how to implement the invention, synchronising the read/write circuitry of the memory scheme being used must be considered. The problem that occurs is that the buffer memory space available can be overrun causing bytes to be lost under two conditions. The first is caused by a Suppress Out which is active for longer than the time required to fill the entire buffer memory. There is no restriction on the length of time that a channel can hold suppress out up. The second is a plurality of Suppress Out sequences resulting in a buffer memory overrun. An example of this scenario is shown below.

|   | CCW | FLAGS | LENGTH OF SUPPRESS OUT |
|---|-----|-------|------------------------|
| 1 | RD  | Chain Data | $25\mu$ seconds |
| 2 |     | Chain Data | $25\mu$ seconds |
| 3 |     | Chain Data | $25\mu$ seconds |

In this example, each time Suppress Out is active, the buffer memory is written into but not read. Therefore, after CCW 3, there has been $75\mu$ seconds worth of data written to the memory without having been read. If, for example, the memory is only $50\mu$ seconds deep, the data for CCW 3 would be lost. This would prohibit the implementation of an ITB function since a CCW chain can be $N\ \mu$ CCW's long and this would then dictate that the memory would have to be N in seconds deep which is impossible to implement.

This requires that the ITB function implementation be independent of the length of channel Suppress Out and also be capable of handling a plurality of chain data CCW's up to a total of N. This can be

7

accomplished by control logic that synchronises FIFO writing in and reading out based on the rising edge of channel Suppress Out. For each channel Suppress Out, the FIFO is written into until it is full and then read out until it is empty. During this period of time the Suppress Out at the control unit is held active independent of the channel Suppress Out. This guarantees that the pipeline between the channel unit and the control unit will be drained prior to inhibiting the FIFO writing in and allowing the FIFO reading out. This ensures that no data is lost. The FIFO's must be of sufficient depth to guarantee that the time to write into the FIFO until it is full is greater than the time required to drain the pipeline between the channel unit and the control unit.

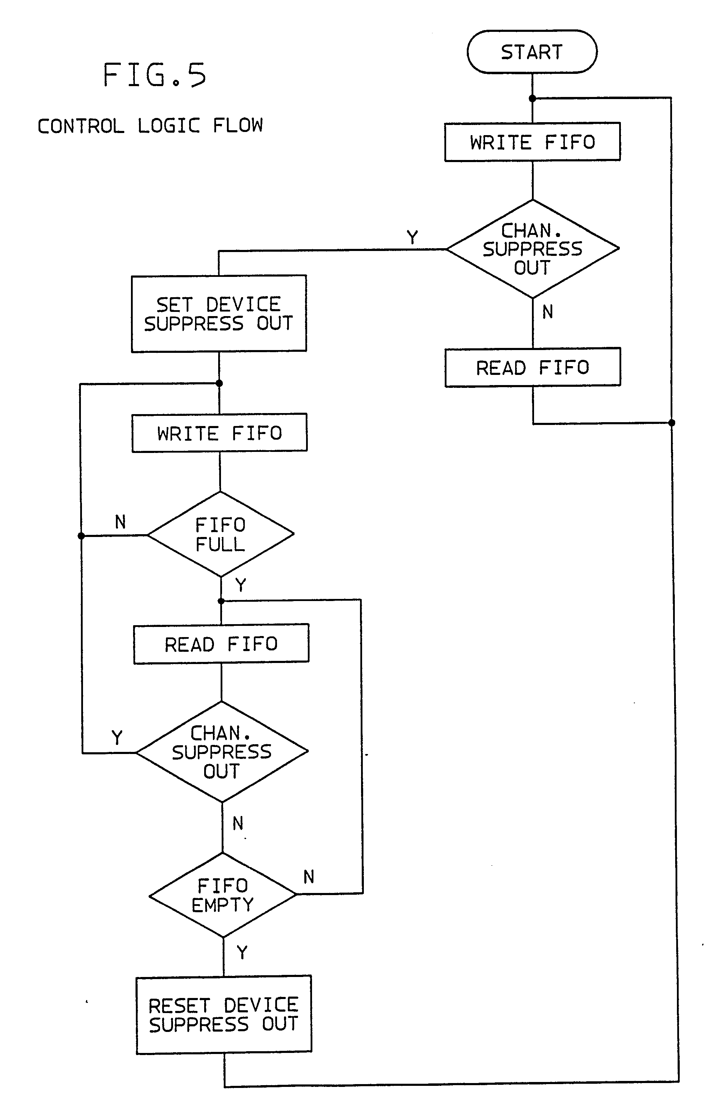

FIG. 5 is a flow chart depicting the operation of ITB unit 199 control logic suitable for ensuring no data is lost when performing the ITB function.

As seen in FIG. 5, the FIFO is written into, then read out of, written into, etc. for so long as the channel Suppress Out signal is not active. When active, the peripheral device controller Suppress Out is set, and writing into the FIFO continues until it is full. When full, the FIFO is read out to prevent data loss. After the reading out, if the channel Suppress Out signal is present, writing into the FIFO continues. If the channel Suppress Out signal is not present, and the FIFO is not empty, it is read out, until emptied. Finally, upon emptying the FIFO, the peripheral device controller Suppress Out is reset. Those skilled in the art will readily appreciate that standard, off the shelf control logic may be used to implement the functions depicted in FIG.S.

A further implementation detail of importance is to allow any data and associated tags active at the time of Suppress Out going active, i.e. data or tags being read out from the FIFO's, to be completely read out prior to inhibiting the FIFO readout operation. The preferred embodiment of the invention is implemented in this fashion to prevent "chopping" of a readout operation by the activation of Suppress Out.

The detailed description of the invention set forth hereinabove demonstrates that the ITB unit 199 is suitable for achieving the stated object of the invention. Utilising the ITB unit function and methodology, data chaining in data streaming mode through a channel extender can be implemented without suffering from the overrun, chaining errors, etc., that occur in known systems and attempt to "stretch" the distance between peripheral devices and a data processor.

It should be apparent to those skilled in the art that one means of varying channel extension capabilities to fit a particular application using the ITB unit function is to deepen the ITB buffers. Obviously, design trade off considerations such as cost, speed, etc. go into the selection of buffer size. These considerations do not in any way limit the scope of the invention.

The foregoing description of a preferred embodiment of the novel methods and apparatus has been presented for the purposes of illustration and description only. It is not intended to be exhaustive or to limit the invention to the precise form disclosed, and obviously many modifications and variations are possible in light of the above teaching.

## Claims

1. A data processing and handling system comprising a data processor (120), a processor channel (107), at least one peripheral device (100), a peripheral device controller (101) and a channel extender (103, 105) for extending the distance that said peripheral device controller may be operated from said processor channel while performing data chaining in a data streaming mode through said channel extender, in which said processor channel has the ability to control data transfer by transmitting a Suppress Output signal to said peripheral device controller in response to which said peripheral device controller stops sending or requesting data,
characterised in that said channel extender (103, 105) comprises

(a) first means (199, 250, 251, 252) for capturing peripheral device controller generated bytes in flight and their associated data transfer tags,

(b) second means (205), coupled to said first means, for storing all captured bytes and tags, when said system is in data streaming mode from the time the processor channel transmits said Suppress Output signal at least until the time the peripheral device controller stops sending or requesting data, and

(c) third means (275, 276, 277), coupled to said second means, for outputting the bytes and tags stored in said second means to the processor channel under processor channel control.

2. A system as claimed in claim 1 characterised in that said second means (205) is located within said processor channel.

3. A system as claimed in claim 1 characterised in that said second means is located in the data path coupling said peripheral device controller output to said processor channel.

4. A system as claimed in claim 1 characterised in that said second means further comprises at least one FIFO buffer storage means.

5. A system as claimed in in claim 1 characterised in that said channel extender (103, 105) further comprises fourth means, coupled to said second means, for operating said second means in a flow through mode.

6. A system as claimed in claim 5 characterised in that said channel extender (103, 105) still further comprises fifth means, coupled to said first means, for allowing captured bytes and tags to bypass said second means when said system is not operating in data streaming mode.

7. A system as claimed in claim 6 characterised in that said channel extender (103, 105) still further comprises

(a) sixth means, coupled to said second means, for temporarily suppressing peripheral device controller output whenever the storage capacity of said second means is exhausted; and

(b) seventh means, coupled to said second means, for emptying said second means whenever peripheral device output is suppressed, and for initiating the resumption of peripheral device controller output once said second means is emptied.

8. A system as claimed in claim 5 characterised in that any flow through mode data read out operation in progress, when said Suppress Output signal is raised, is allowed to be completed before terminating data flow by the operation of said second means.

FIG.1

**CONTROL UNIT**    **EXTENDER Y BOX**    **EXTENDER X BOX**    **CHANNEL**

PERIPHERAL
DEVICE
100

PROCESSOR
120

ITB
199

OEMI
INTERFACE 102

SERIAL LINK
104

OEMI
INTERFACE 106

EP 0 395 376 A2

FIG.2

FIG.3

FIG.4A

# FIG.4B

# FIG.5

CONTROL LOGIC FLOW